Europäisches Patentamt

**European Patent Office**

**Office européen des brevets**

(19)

(11) Numéro de publication : **0 188 926**
**B1**

(12)

# FASCICULE DE BREVET EUROPÉEN

(45) Date de publication du fascicule du brevet :
**15.03.89**

(21) Numéro de dépôt : **85402065.8**

(22) Date de dépôt : **23.10.85**

(51) Int. Cl.⁴ : **C 09 J   3/14, C 08 L 51/06**

(54) **Compositions adhésives à base de polypropylène modifié par greffage d'un monomère insaturé.**

Une requête selon la Règle 88 CBE pour correction de la description a été déposée le 04.11.1985. Il sera statué sur cette requête au cours de la procédure engagée devant la Division d'Examen.

(30) Priorité : **30.10.84 FR 8416568**

(43) Date de publication de la demande :
**30.07.86 Bulletin 86/31**

(45) Mention de la délivrance du brevet :
**15.03.89 Bulletin 89/11**

(84) Etats contractants désignés :
**BE DE GB IT NL SE**

(56) Documents cités :
**PATENTS ABSTRACTS OF JAPAN, vol. 5, no. 24 (C-43) [696], février 1981, page 42C43; & JP - A - 55 149 341 (IDEMITSU KOSAN K.K.) 20.11.1980
PATENTS ABSTRACTS OF JAPAN, vol. 8, no. 260 (C-254) [1697], 29 novembre 1984, page 22C254; & JP - A - 59 136 369 (MITSUBISHI KASEI KOGYO K.K.) 04.08.1984
PATENTS ABSTRACTS OF JAPAN, vol. 8, no. 138 (C-231) [1575], 27 juin 1984, page 8C231; & JP - A - 59 47 244 (MITSUBISHI YUKA K.K.) 16.03.1984
PATENTS ABSTRACTS OF JAPAN, vol. 8, no. 279 (C-257) [1716], 20 décembre 1984, page 105C257; & JP - A - 59 149 944 (TOUYOU SEIKAN K.K.) 28.08.1984**

(73) Titulaire : **ATOCHEM
4 & 8, Cours Michelet La Défense 10
F-92800 Puteaux (FR)**

(72) Inventeur : **Nogues, Pierre Résidence Saint-Germain Apt. 19
Boulevard de Normandie
F-27000 Evreux (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

Les polypropylènes greffés au moyen d'un monomère insaturé porteur d'une fonction anhydride d'acide sont connus pour leurs propriétés adhésives que l'on attribue aux fonctions polaires apportées par ce monomère.

Il est connu également qu'une concentration limitée en ces fonctions polaires suffit à assurer de bonnes propriétés adhésives sur de nombreux substrats ; aussi, pour des raisons de commodité d'emploi, on peut diluer les polypropylènes greffés (PPg) dans une polyoléfine (brevet US 3 856 889) ; en procédant ainsi, on obtient des mélanges qui, bénéficiant des bonnes propriétés physiques et mécaniques de la polyoléfine de dilution, sont meilleurs de ce point de vue que les PPg qu'ils contiennent, ce qui est un avantage supplémentaire.

On a déjà tenté d'augmenter les propriétés adhésives du polypropylène greffé anhydride maléique ; c'est ainsi que, dans ce but, la demande japonaise n° 80-40396 du 31 mars 1980, Publ. 81 136 833 revendique l'addition à ce polymère d'un glycéride d'acide gras époxydé.

Dans la demande de brevet japonais 55-149341 on propose également une composition adhésive à base de polyoléfine quelconque modifiée par un acide carboxylique insaturé et d'un composé hydroxylé quelconque associés nécessairement à un caoutchouc.

De même dans la demande japonaise 59-13369 une composition adhésive à base polyoléfine modifiée par un acide carboxylique insaturé est proposée. A cette polyoléfine est associée une polyamide. Cette combinaison, le polyamide ne possédant qu'une fonction amine et une fonction acide, présente l'inconvénient de laisser des fonctions acides libres dans la composition adhésive.

Nous avons trouvé, et ceci fait l'objet de la présente invention, que l'on pouvait fortement augmenter les propriétés adhésives des PPg, seuls ou en mélange avec une ou plusieurs polyoléfines, si on les additionnait d'un composé, polymère ou non, porteur d'au moins deux fonctions, identiques ou non, réactives vis-à-vis de la fonction anhydride d'acide.

Ce composé que, pour des raisons de commodité, nous appellerons, par la suite, « composé R », peut posséder, entre autres, au moins deux fois la fonction alcool ou, au moins, deux fois la fonction amine.

Ce peut donc être un diol ou un triol... ou une diamine ou une triamine... ou un composé possédant une fonction alcool et une fonction amine ou deux fois la fonction amine et une fois la fonction alcool, etc...

Par « polypropylènes greffés » (PPg) nous désignons tous les homopolymères du propylène ou copolymères avec divers monomères (qu'ils soient séquencés ou statistiques, à condition que ces copolymères contiennent au moins 50 % en moles de propylène) sur lesquels on a greffé un monomère porteur de fonction anhydride d'acide.

Ce monomère de greffage est un composé porteur d'au moins une double liaison active en polymérisation radicalaire et d'au moins une fonction anhydride d'acide cyclique à cinq centres.

Ce peut être l'anhydride maléique, citraconique, méthyl-2 maléique, chloro-2 maléique, carbométhoxy-2 maléique, diméthyl-2,3 maléique, dichloro-2,3 maléique, dicarbométhoxy-2,3 maléique, bicyclo (2.2.1) hept-5-ène-2,3 dicarboxylique, méthyl-4 cyclohex-4-ène 1,2 dicarboxylique.

L'invention s'applique à de tels PPg, quel qu'en soit le poids moléculaire.

De nombreuses méthodes ont été proposées pour fabriquer les PPg.

On peut préparer des sites actifs sur la chaîne de polypropylène par traitement avec des amorceurs de type peroxydique ou diazoïque ou par traitement électromagnétique, sites sur lesquels l'anhydride viendra se greffer par voie radicalaire.

On peut préactiver le polypropylène dans un premier stade indépendant du greffage et, dans un second stade, mettre le polypropylène préactivé en contact avec le monomère polymérisable.

On peut également réaliser simultanément l'activation et le greffage en soumettant à l'action d'un peroxyde une suspension de poudre de polypropylène dans un liquide ou une solution de polypropylène dans un solvant convenable (US 2 970 129) ; on peut aussi opérer dans un courant gazeux (US 3 414 551), le solvant ou le courant gazeux contenant la quantité convenable du monomère de greffage défini précédemment.

On peut également opérer à l'état fondu.

Parmi les composés R, possédant au moins deux fois la fonction alcool, citons : l'éthylène glycol, le propylène glycol, le butane diol-1,3 le butane diol-1,4, l'hexane diol-1,6, le 2-butène 1,4 diol, l'(hydroxy-2 éthoxy) 1-4 butanol-1, l'hexane triol 1,2,6, l'érythritol, le sucrose, le glucose, la dihydroxyacétone, les polyoxyalkylène glycols tels que polyoxyéthylène glycols, polyoxytétraméthylène glycols de différents poids moléculaires, les dérivés hydroxylés des copolymères éthylène-acétate de vinyle, les copolymères de l'éthylène avec un comonomère porteur d'une fonction alcool tel que l'acrylate d'hydroxy éthyle.

Parmi les composés R possédant au moins deux fois la fonction amine, citons :

les oligomères polyamides alpha-oméga diamines de différents poids moléculaires, obtenus par polycondensation en présence d'une diamine d'un monomère générateur de polyamide tel que sel de diacide et de diamine (sel AH par exemple), aminoacide, lactame tels le caprolactame, lauryllactame.

Conviennent particulièrement bien :

les oligomères de polyamide 11 ou 12 alpha-oméga diamines dont la synthèse a été décrite dans les demandes de brevets Fr. n° 83-15859 et 84-13244 dont le contenu s'ajoute à cette description ;

les diamines aliphatiques ou aromatiques telles que hexaméthylène diamine, nonaméthylène diamine, undécaméthylène diamine, dodécaméthylène diamine, métaxylylène diamine, bis-p. aminocyclo-hexylméthane.

Les quantités respectives des deux principaux constituants PPg et composé R qui réagissent entre eux pour donner les compositions adhésives suivant l'invention, seront telles que leur rapport de molarité, RM, défini ainsi :

$$RM = \frac{\text{Concentration en fonctions réactives portées par R}}{\text{Concentration en fonctions anhydride d'acide portées par le PPg}}$$

$$= \frac{\text{Nombre de fonctions réactives de R}}{\text{Nombre de fonctions anhydride d'acide du PPg}}$$

soit compris entre 0,01 et 5 et, de préférence, entre 0,1 et 2, une fonction anhydride d'acide correspondant à deux fonctions acides carboxyliques.

La préparation des compositions adhésives selon l'invention se fera par simple malaxage à l'état fondu du polypropylène greffé, seul ou en mélange avec une polyoléfine, avec le composé R.

(La polyoléfine de dilution peut être, entre autres, un homopropylène, copolymère propylène-éthylène séquencé ou statistique, du polyéthylène haute ou basse densité).

Tout appareil de transformation des matières plastiques assurant un bon malaxage conviendra, tel que malaxeur Buss, BRABENDER, extrudeuse monovis, extrudeuse double vis type WERNER et PFLEIDERER. On peut même opérer dans un simple autoclave.

On peut alimenter ces appareils avec les deux ou trois constituants (PPg avec ou sans polyoléfine et R) arrivant séparément ou avec leur mélange préparé préalablement, par simple mélange au tonneau ou dans un appareil de mélange à sec.

On peut également, à ce stade, ajouter des charges, colorants, additifs protecteurs du vieillissement par la lumière, stabilisants chaleur etc...

Le malaxage a lieu à des températures comprises entre 160 et 250 °C de préférence entre 180° et 210 °C.

La réaction entre PPg et composé R est rapide et on peut la suivre, par spectrographie infra-rouge, en observant la vibration caractéristique de la fonction ester à 1 730 cm$^{-1}$ lorsque le composé R est un alcool, ou celle de la fonction amide à 1 650 cm$^{-1}$ dans le cas d'un composé R aminé.

Les forces d'adhérence, obtenues avec ces nouveaux composés, sont mesurées de la façon suivante :

des granulés de polymère sont disposés entre deux feuilles d'aluminium de 100 microns d'épaisseur que l'on place entre les mâchoires d'une soudeuse, réglée à la température de 200 °C — on applique alors une pression de 4 bars pendant 5 minutes, retire l'assemblage et le laisse refroidir.

Après avoir découpé des éprouvettes de 2 cm de largeur, on procède à des essais de pelage en T en les tractionnant à la vitesse de 50 mm/minute, au moyen d'un dynamomètre, à la température ordinaire.

Les compositions adhésives, obtenues selon l'invention, peuvent être utilisées pour coller d'autres métaux que l'aluminium cité ci-dessus, tels l'acier, le cuivre... mais également d'autres substrats comme le bois, le cuir, le liège, ainsi que les matières plastiques...

Pour illustrer l'invention, nous citerons les exemples suivants :

Exemple 1

On greffe de l'anhydride maléique sur un homopolymère de polypropylène de la manière suivante :
dans un autoclave, on introduit :
440 g de monochlorobenzène
96 g de LACQTENE 3050 FNI (olypropylène vendu par la Société ATOCHEM — indice de fluidité ASTM D 1238 à 230 °C sous 5 kg égal à 5)
8 g d'anhydride maléique
8,2 g de peroxyde de benzoyle.

Après maintien pendant 3 heures à la température de 130 °C, on obtient un PP greffé à 1,9 % dont l'indice de fluidité mesuré à 190 °C sous 325 g est de 56.

Dans une cuve de malaxeur BRABENDER, on mélange à la température de 178 °C et pendant 10 minutes
40,5 g de LACQTENE 3050 FNI
environ 4,5 g du PPg obtenu ci-dessus
seuls ou avec addition, soit, d'un monoalcool : l'octanol-1, soit, d'un dialcool : l'hexanediol-1,6.

Le tableau ci-dessous regroupe les résultats obtenus :

3

| Composition adhésive, en grammes | | | | Rapport molaire $RM = \dfrac{[OH]}{[AM]}$ | Force de pelage sur aluminium en da N/cm |
|---|---|---|---|---|---|
| PP | PPg | Réactif hydroxylé | | | |
| | | Nature | Poids | | |
| 40,5 | 4,5 | - | 0 | 0 | 0,27 |
| 40,5 | 4,498 | Hexanediol-1,6 | 0, 02 | 0,4 | 0,50 |
| 40,5 | 4,498 | id | 0, 04 | 0,8 | 0,79 |
| 40,5 | 4,492 | id | 0, 08 | 1,6 | 0,81 |
| 40,5 | 4,482 | Octanol-1 | 0, 18 | 1,6 | 0,29 |

Ces résultats montrent clairement qu'un réactif monohydroxylé comme l'octanol-1 n'a pratiquement pas d'action, ce qui n'est pas le cas d'un réactif dihydroxylé comme l'hexanediol-1,6.

A noter que l'addition de ce même hexanediol au PP seul, sans PPg, ne lui confère pas de propriétés adhésives.

Exemple 2

En utilisant un mode opératoire analogue à celui de l'exemple 1, on greffe 4,1 % d'anhydride maléique sur un copolymère séquencé de propylène et d'éthylène vendu par la Société ATOCHEM sous l'appellation LACQTENE P 3050 MN4 (indice de fluidité à 230 °C sous 5 kg égal à 5).

Ce copolymère greffé dont la viscosité de fusion (mesurée à 200 °C, avec un taux de cisaillement de 10 $s^{-1}$, au moyen de l'appareil RHEOMAT 30, fabriqué par la Société Suisse CONTRAVES) est égale à 100 Pa.s est alors malaxé à l'état fondu, à 180 °C, dans la cuve du malaxeur BRABENDER de l'exemple 1, seul, ou, avec, soit du polyoxytétraméthylène glycol (PTMG),

soit du polyoxyéthylène glycol (PEG) de différentes masses moléculaires,

soit un oligomère de polyamide 11 alpha-oméga diamine de masse moléculaire 1050 obtenu par polycondensation d'acide 11-aminoundécanoïque en présence d'hexaméthylène diamine, suivant le mode opératoire décrit dans la demande de brevet française n° 84.13244.

Les résultats rassemblés dans le tableau ci-dessous, montrent clairement que l'addition de polymères porteurs de deux fonctions réactives vis-à-vis du PP greffé par l'anhydride maléique a un effet bénéfique sur les propriétés adhésives de celui-ci.

| Poids de PPg en g | REACTIF | | RM | Force de pelage sur aluminium en da N/cm. |
|---|---|---|---|---|
| | Nature | Poids en g | | |
| 45 | - | 0 | 0 | 0,17 |
| 42,12 | PTMG Mn = 650 | 2,88 | 0,5 | 1,0 |
| 39,59 | " | 5,41 | 1,0 | 1,0 |
| 42,33 | PEG Mn = 600 | 2,67 | 0,5 | 1,47 |
| 41,50 | PEG Mn = 2.000 | 3,50 | 0,2 | 1,25 |
| 37,18 | " | 7,82 | 0,5 | 1,87 |
| | | | $RM = \dfrac{[NH_2]}{[AM]}$ | |
| 44,03 | PA di $NH_2$ Mn = 1050 | 0,97 | 0,1 | 0,21 |
| 40,53 | " | 4,47 | 0,5 | 0,96 |

Where $RM = \dfrac{[OH]}{[AM]}$

4

### Exemple 3

On greffe de l'anhydride maléique sur le copolymère LACQTENE P 3050 MN4, défini à l'exemple 2, de la manière suivante :

dans un autoclave, on introduit :
440 g de monochlorobenzène
96 g de 3050 MN4
48 g d'anhydride maléique
8,2 g de peroxyde de benzoyle.

Après maintien à la température de 130 °C pendant 2 heures, on obtient un PPg greffé à 1,0 %, d'indice de fluidité à 230 °C sous 5 kg égal à 70.

Ce PPg est dilué dans du LACQTENE 3050 MN4 identique à celui qui l'avait engendré, en alimentant une extrudeuse monovis 30 D, réglée à 200 °C avec un mélange de 180 g de 3050 MN4 et 20 g de PPg ; après un temps de séjour de deux minutes, il en sort un jonc liquide que l'on solidifie et refroidit par passage dans un bac d'eau puis granule.

Un essai analogue est repris avec cette différence que le mélange ci-dessus est additionné :
soit d'hexane diol-1,6
soit de polyoxyéthylène glycol de Mn = 600 (PEG)
soit d'oligomère PA di $NH_2$ de Mn = 1.050 défini à l'exemple 2.

Des collages de feuilles d'aluminium sont réalisés au moyen des granulés obtenus dans ces divers essais et les résultats obtenus rassemblés dans le tableau ci-dessous.

| Composition adhésive en grammes | | | Rapport molaire | Force de pelage sur aluminium |
|---|---|---|---|---|
| PP | PPg | Composé R<br>nature    poids | $RM = \dfrac{[OH]}{[AM]}$ | en da N/cm |
| 180 | 20 | 0 | 0 | 1,23 |
| 180 | 20 | Hexanediol 0,12 | 1 | 1,29 |
| 180 | 20 | "          0,24 | 2 | 1,31 |
| 180 | 20 | PEG    0,61 | 1 | 1,54 |
| | | | $RM = \dfrac{[NH_2]}{[AM]}$ | |
| 130 | 20 | PA di NH₂ 2,14 | 2 | 1,54 |

### Exemple 4

Comme dans l'exemple 3, on modifie par greffage du LACQTENE P 3050 MN4 mais cette fois-ci on greffe 1,3 % d'anhydride maléique ; le PPg obtenu à un indice de fluidité à 230 °C sous 5 kg de 70.

Il est malaxé alors 10 minutes à 180 °C avec un copolymère éthylène-acétate de vinyle (à 28 % d'acétate de vinyle) hydrolysé (EVA OH) dont l'équivalent molaire en fonction hydroxyle, mesuré par analyse infra-rouge, est de 0,2 mole OH/100 g de résine.

(Voir Tableau page suivante)

| Poids de PPg en g | Poids d'EVA OH en g | $RM = \dfrac{[OH]}{[AM]}$ | Force de pelage sur l'aluminium. en da N/cm |
|---|---|---|---|
| 45,00 | 0 | 0 | 0,83 |
| 44,55 | 0,45 | 0,15 | 1,14 |
| 43,65 | 1,35 | 0,46 | 1,43 |
| 42,75 | 2,25 | 0,79 | 1,87 |

### Exemple 5

On greffe encore de l'anhydride maléique sur du copolymère de propylène et d'éthylène mais, cette fois-ci, le greffage n'a pas lieu sur le copolymère en solution mais à l'état fondu et, ceci de la manière suivante :
une extrudeuse monovis de laboratoire est alimentée avec un mélange constitué de :
96 parties en poids de LACQTENE P 3050 MN4
3 parties en poids d'anhydride maléique
1 partie en poids de perbenzoate de butyle tertiaire.
Les conditions de marche étant les suivantes :
vitesse de la vis : 40 tours/minute
températures lues : 175 °C à l'entrée
200 °C dans le corps principal
180 °C pour la filière.
temps de séjour de la matière : 40 secondes
il en sort un PP greffé à 0,55 % dont la viscosité de fusion (mesurée à 220 °C avec un taux de cisaillement de 1 s$^{-1}$ dans l'appareil RHEOMAT 30) est de 23 Pa.s.

Comme dans l'exemple 1, on malaxe dans la cuve du BRABENDER réglée à 220 °C et pendant 10 minutes le PPg obtenu avec du LACQTENE P 7091 (copolymère statistique propylène-éthylène de la Société ATOCHEM d'indice de fluidité égal à 6 à 230 °C et sous 2,16 kg) seuls ou avec addition de polyoxyéthylène glycol de Mn = 2.000

| Composition adhésive en grammes | | | Rapport molaire $RM = \dfrac{[OH]}{[AM]}$ | Force de pelage sur aluminium en da N/cm |
|---|---|---|---|---|
| PP | PPg | PEG | | |
| 40 | 10 | 0 | 0 | 0,05 |
| 32 | 8 | 1,5 | 2 | 0,70 |

On constate que l'addition d'une faible quantité de PEG augmente l'adhérence de manière considérable.

### Exemple 6

On réalise par coextrusion avec trois extrudeuses un complexe tricouches ainsi constitué :
LACQTENE P 3020 GN3 (copolymère statistique polypropylène-éthylène de la Société ATOCHEM d'indice de fluidité égal à 1,7 à 230 °C et 2,16 kg) : épaisseur 0,8 mm
liant : épaisseur 0,1 mm
EVAL ECF (copolymère éthylène-alcool vinylique de la Société KURARAY) : épaisseur 0,2 mm
Le liant est obtenu par extrusion, comme dit ci-dessus, en alimentant une des trois extrudeuses avec un des deux mélanges suivants :

6

LACQTENE P 7091 (défini à l'exemple 4) 95 parties en poids
Copolymère greffé de l'exemple 2          5 parties en poids

ou

LACQTENE P 7091                                        95 parties en poids
Copolymère greffé de l'exemple 2          5 parties en poids
EVA à 28 % acétate hydrolysé défini dans l'exemple n° 4 (EVA OH) 0,25 partie en poids
la matière dans les deux cas séjournant dans l'extrudeuse à la température de 200 °C pendant 3 minutes.

On fabrique ainsi deux complexes tricouches sur lesquels on mesure l'énergie de séparation entre le liant et la couche d'EVAL grâce à des essais de pelage en T à la température ordinaire au moyen d'un dynamomètre avec une vitesse de tractionnement de 200 mm/minute.

Les mêmes essais de pelage sont recommencés sur les deux complexes calandrés.

Voici les résultats trouvés :

| Nature du liant | Energie de séparation en da N/cm | |
| --- | --- | --- |
| | Complexe non calandré | Complexe calandré |
| P 7091 + PPg | 2,80 | 2,20 |
| P 7091 + PPg + EVA OH | Indélaminable | 3,25 |

Là, encore, on constate l'influence bénéfique, en matière d'adhérence, de l'addition d'un composé hydroxylé.

## Revendications

1. Composition adhésive composée de polypropylène modifié par greffage d'un monomère insaturé porteur de fonction anhydride d'acide, éventuellement dilué dans une polyoléfine additionnée d'un composé R porteur de fonction réactive vis-à-vis de la fonction anhydride caractérisée en ce que le composé R est porteur d'au moins deux fonctions, identiques ou différentes, réactives vis-à-vis de la fonction anhydride et se trouve en quantité telle que le rapport de molarité, défini comme le rapport du nombre de fonctions réactives portées par le composé R au nombre de fonctions anhydride portées par le polypropylène greffé, soit compris entre 0,01 et 5, et, de préférence, entre 0,1 et 2.

2. Composition selon 1 caractérisée en ce que le polypropylène est greffé avec de l'anhydride maléique.

3. Composition selon l'une des revendications 1 et 2 caractérisée en ce que le composé R appartient au groupe constitué par les polyols et les polyamines.

4. Composition selon la revendication 3 caractérisée en ce que le composé R est l'hexane diol-1,6.

5. Composition selon la revendication 3 caractérisée en ce que le composé R appartient au groupe constitué par les polyoxyéthylène glycols et les polyoxytétraméthylène glycols.

6. Composition selon la revendication 3 caractérisée en ce que le composé R est un oligomère de polyamide 11 alpha-oméga diamine, ou de polyamide 12 alpha-oméga diamine ou de polyamide 6 alpha-oméga diamine.

7. Composition selon la revendication 3 caractérisée en ce que le composé R est un copolymère éthylène-acétate de vinyle hydrolysé.

8. Procédé de fabrication de la composition selon l'une des revendications 1 à 7 caractérisé en ce que l'on malaxe à l'état fondu le polypropylène greffé, éventuellement dilué avec une polyoléfine, avec le composé R.

9. Utilisation de la composition selon l'une des revendications 1 à 7 à l'assemblage d'objets en aluminium.

## Claims

1. An adhesive composition composed of polypropylene modified by grafting with an unsaturated monomer carrying an acid anhydride group, optionally diluted in a polyolefine containing an added compound R carrying a group which is reactive with respect to the anhydride group, characterized in that the compound R carries at least two groups, identical or different, which are reactive with respect to the anhydride group, and is present in an amount such that the molar ratio, defined as the number of reactive

7

groups carried by the compound R to the number of anhydride groups carried by the grafted polypropylene, is between 0.01 and 5 and preferably between 0.1 and 2.

2. A composition according to claim 1, characterized in that the polypropylene is grafted with maleic anhydride.

3. A composition according to one of claims 1 and 2, characterized in that the compound R belongs to the group constituted by polyols and polyamines.

4. A composition according to claim 3, characterized in that the compound R is 1,6-hexanediol.

5. A composition according to claim 3, characterized in that the compound R belongs to the group constituted by polyoxyethylene glycols and polyoxytetramethylene glycols.

6. A composition according to claim 3, characterized in that the compound R is an oligomer of polyamide 11 alpha-omega diamine, or of polyamide 12 alpha-omega diamine, or of polyamide 6 alpha-omega diamine.

7. A composition according to claim 3, characterized in that the compound R is a hydrolysed ethylene-vinyl acetate copolymer.

8. A process for manufacturing the composition according to one of claims 1 to 7, characterized in that the grafted polypropylene is mixed in the molten state, optionally diluted with a polyolefine, with the compound R.

9. Use of the composition according to one of claims 1 to 7 for assembling objects made of aluminium.

**Patentansprüche**

1. Klebstoffzusammensetzung bestehend aus Polypropylen modifiziert durch Aufpfropfen eines ungesättigten Monomeren, das eine Säureanhydrid-Funktion trägt, gegebenenfalls verdünnt in einem Polyolefin, dem eine Verbindung R zugegeben ist, die eine Funktion trägt, die gegenüber der Anhydridfunktion reaktiv ist, dadurch gekennzeichnet, daß die Verbindung R wenigstens zwei gleiche oder unterschiedliche Funktionen trägt, die gegenüber der Anhydridfunktion reaktiv sind und in einer solchen Menge vorliegt, daß das Molverhältnis, definiert als Verhältnis der Zahl der reaktiven Funktionen, die die Verbindung R trägt, zur Zahl der Anhydridfunktionen, die das Pfropf-Polypropylen trägt, zwischen 0,01 und 5 und vorzugsweise zwischen 0,1 und 2 liegt.

2. Zusammensetzung gemäß Anspruch 1, dadurch gekennzeichnet, daß das Polypropylen mit Maleinsäureanhydrid gepfropft ist.

3. Zusammensetzung gemäß einem der Ansprüche 1 oder 2, dadurch gekennzeichnet, daß die Verbindung R zur Gruppe bestehend aus den Polyolen und den Polyaminen gehört.

4. Zusammensetzung gemäß Anspruch 3, dadurch gekennzeichnet, daß die Verbindung R Hexan-1,6-diol ist.

5. Zusammensetzung gemäß Anspruch 3, dadurch gekennzeichnet, daß die Verbindung R zur Gruppe bestehend aus den Polyoxyethylenglykolen und den Polyoxytetramethylenglykolen gehört.

6. Zusammensetzung gemäß Anspruch 3, dadurch gekennzeichnet, daß die Verbindung R ein Oligomer eines Polyamid 11 alpha-omega Diamins, oder eines Polyamid 12 alpha-omega Diamins oder eines Polyamid 6 alpha-omega Diamins ist.

7. Zusammensetzung nach Anspruch 3, dadurch gekennzeichnet, daß die Verbindung R ein hydrolisiertes Copolymer Ethylen-Vinylacetat ist.

8. Verfahren zur Herstellung einer Zusammensetzung gemäß einem der Ansprüche 1 bis 7, dadurch gekennzeichnet, daß man in geschmolzenem Zustand das gepfropfte Polypropylen gegebenenfalls verdünnt mit einem Polyolefin mit der Verbindung R mischt.

9. Verwendung der Zusammensetzung gemäß einem der Ansprüche 1 bis 7 für das Zusammenfügen von Gegenständen aus Aluminium.